# EUROPEAN PATENT SPECIFICATION

(11) **EP 1 192 678 B1**
(45) Date of publication and mention of the grant of the patent: **12.03.2003**
(21) Application number: 00928377.1
(22) Date of filing: 25.04.2000
(51) Int. Cl.: H01M 2/12, H01G 9/12

(54) **ELECTROCHEMICAL CELL HAVING LOW PROFILE SEAL ASSEMBLY WITH ANTI-RESEALING VENT**
ELEKTROCHEMISCHE ZELLE MIT FLACHPROFIL-DICHTUNGSANORDNUNG MIT NICHT WIEDER VERSCHLIESSBAREM VENTIL
CELLULE ELECTROCHIMIQUE DOTEE D'UN ENSEMBLE D'ETANCHEITE MINCE A EVENT EMPECHANT UNE NOUVELLE FERMETURE ETANCHE DE LA CELLULE

(30) Priority: 27.04.1999 US 300413
(43) Date of publication of application: 03.04.2002
(73) Proprietor: Eveready Battery Company, Inc., Westlake, Ohio 44145 (US)
(72) Inventor: JANMEY, Robert, M., Olmsted Township, OH 44138 (US)
(74) Representative: Fairbairn, Angus Chisholm
(86) International application number: PCT/US00/11114
(87) International publication number: WO 00/065675

(56) References cited:
- EP-A- 0 569 209
- US-A- 5 667 912

## Description

The present invention generally relates to electrochemical cells and, more particularly, to a low profile seal assembly for sealing the open end of a cell container and having a pressure release mechanism for venting when exposed to excessive pressure.

Conventional alkaline electrochemical cells generally include a steel cylindrical can having a positive electrode, referred to as the cathode, which comprises manganese dioxide as the active material. The electrochemical cell also includes a negative electrode, referred to as the anode, which comprises zinc powder as the active material. The cathode is typically formed against the interior surface of the steel can, while the anode is generally centrally disposed in the can. Alternatively, in so-called 'jelly-roll' cell constructions, the anode and cathode are spirally wound. A separator is located between the anode and the cathode, and an alkaline electrolyte solution simultaneously contacts the anode, the cathode, and the separator. A conductive current collector is commonly inserted into the anode active material, and a seal assembly, which includes a seal member, provides closure to the open end of the steel can to seal the active electrochemical materials in the sealed volume of the can.

Cylindrical alkaline cells are commonly sealed closed by placing an annular nylon seal above a bead in the open end of the steel can and crimping the upper end of the can inwardly and over the outer periphery of the seal to compress the seal against the bead. However, electrochemical cells commonly employ electrochemically active materials, such as zinc, which generate hydrogen gas during storage and sometimes during or following service use. When the can is sealed closed, excessive build-up of high pressure gases within the sealed can may cause damage to the cell and/or the device in which the cell is employed.

One approach to avoiding a potentially excessive build-up of pressure in a cell has been to employ a resealable valve system that periodically releases excessive gas pressure from within the active cell volume. However, the continued periodic release of gas pressure may, in some situations, permit the release of electrolyte solution containing salts or other particulate matter, which may foul the resealable valve, and generally requires additional costly components.

Another approach to avoiding excessive build-up of pressure involves employing a sealed membrane that is intended to blow-out when exposed to excessive pressure by either puncture or rupture of the membrane itself. Puncture mechanisms such as a spiked member may be employed to punch a hole in the sealed membrane once the pressure reaches a predetermined amount. Alternatively, a rupture mechanism may be provided by employing a thin membrane which ruptures when the internal pressure of the cell becomes too great.

Other approaches to venting excessive pressure have included the use of a vent formed in the seal which is intended to rupture upon experiencing an excessive pressure build-up in the cell. For example, US-A-5,667,912 discloses a current collector assembly having a low profile seal with a thinned portion which is intended to shear when the internal pressure exceeds a predetermined pressure.

When the seal has a thinned portion or other stress concentration vent formed axisymmetrically about a complete 360 degree rotation of the cell's central longitudinal axis, a potential problem may exist in that the vent, when completely activated, may force the vented diaphragm portion of the seal outward throughout the full 360 degree rotation. If a cover is located close enough to the venting seal, it is possible that the vented seal diaphragm may make contact with the surface of the cover with such force that a pressure-holding seal is made. The resealing of the cell during a 360 degree vent condition may result in the build-up of an excessive pressure beyond which the cell was intended to operate. In this circumstance and when excessive pressure is experienced, the crimp formed at the rim of the can may be forced to release and thereby open the cell's container. Accordingly, it is therefore desirable to provide for an electrochemical cell having a low profile seal assembly that effectively vents, when necessary, and prevents resealing of the seal member with the cover.

The present invention improves the protective safeguards of an electrochemical cell with an enhanced low profile seal assembly for sealing the open end of the electrochemical cell's container to provide controlled pressure venting, while effectively preventing resealing of the vent mechanism.

Accordingly, in a first aspect, the present invention provides an electrochemical cell comprising:
a container having a closed bottom and an open top end;
a positive electrode disposed in the container;
a negative electrode disposed in the container;
a separator disposed between the positive electrode and the negative electrode;
an electrolyte disposed in the container;
a seal member disposed in the open top end of the container for closing the open top end of the container, the seal member having a stress concentrator formed about a central longitudinal axis of the cell for providing pressure release to vent high pressure gases;
a cover disposed in the open end of the container and at least partially covering the seal member, the cover having at least one opening formed therein; and
stand-off means for preventing resealing of the seal member against the cover when the seal member vents.

In an embodiment of this first aspect, the electrochemical cell comprises:
a container having a closed bottom end and an open top end;
a positive electrode disposed in the container;
a negative electrode disposed in the container;
a separator disposed between the positive electrode and the negative electrode;
an electrolyte disposed in the container;
a seal member disposed in the open top end of the container for closing the open top end of the container, the seal member having a stress concentrator formed about a central longitudinal axis of the cell for providing pressure release to vent high pressure gases;
a cover disposed in the open end of the container and substantially covering the seal member, the cover having at least one opening formed therein; and
a stand-off member disposed between a top surface of the seal member and a bottom surface of the cover for distancing at least a portion of the seal member from the cover to prevent resealing of the seal member when the seal member vents.

In another embodiment, the electrochemical cell comprises:
a container having a closed bottom and an open top end;
a positive electrode disposed in the container;
a negative electrode disposed in the container;
a separator disposed between the positive electrode and the negative electrode;
an electrolyte disposed in the container;
a seal member disposed in the open top end of the container for closing the open top end of the container, the seal member having a stress concentrator formed about a central longitudinal axis of the cell for providing pressure release to vent high pressure gases;
a cover disposed in the open end of the container and overlying at least a portion of the seal member, the cover having a bottom surface facing the seal member, the cover further having at least one opening formed therein; and
a stand-off member disposed between a top surface of the seal member and the bottom surface of the cover for distancing at least a portion of the seal member from the cover to prevent resealing of the seal member when the seal member vents.

In yet another embodiment, the electrochemical cell comprises:
a container having a closed bottom end and an open top end;
a positive electrode disposed in the container;
a negative electrode disposed in the container;
a separator disposed between the positive electrode and the negative electrode;
an electrolyte disposed in the container;
a seal member disposed in the open top end of the container for closing the open top end of the container, the seal member having a stress concentrator formed about a central longitudinal axis of the cell for providing pressure release to vent high pressure gases;
a cover disposed in the open end of the container and at least partially covering the seal member, the cover having at least one vent passage therein; and
means for forming a passage between the seal member and the cover for preventing resealing of the seal member when the seal member vents, said means comprising one or more stand-off members preferably formed on a surface of the seal member.

In a second aspect, the present invention provides a seal assembly for sealing the open end of an electrochemical cell container, the seal assembly comprising:
a seal member adapted to be disposed in an open end of a container to provide a sealed closure to the open end of the container, the seal member having a stress concentrator formed about a complete 360 degree rotation;
a cover overlying at least a portion of the seal member, the cover having at least one opening formed therein; and
a stand-off member disposed between a top surface of the seal member and a bottom surface of the cover for distancing at least a portion of the seal member from the cover to prevent resealing of the seal member during can venting.

In the seal assembly according to this second aspect, the stand-off member comprises preferably at least one rib formed on the top surface of the seal member, more preferably three ribs, and in particular three ribs that are angularly spaced sixty degrees one apart from another. The stand-off member preferably comprises a vertically extending member formed on the top surface of the seal member adjacent to the stress concentrator.

In a third aspect, the present invention provides a method for assembling an electrochemical cell comprising the steps of:
providing a container having a closed bottom end and an open top end;
disposing a positive electrode in the container;
disposing a negative electrode in the container;
disposing a separator between the positive electrode and the negative electrode;
disposing an electrolyte in the container;
providing a seal member having a stress concentrator formed in the seal member about a central longitudinal axis of the cell;
disposing the seal member in the open top end of the container for closing the open top end of the container;
disposing a cover in the open top end of the container and over the seal member, the cover having at least one opening formed therein; and
providing a stand-off member disposed between a top surface of the seal member and a bottom surface of the cover for keeping at least a portion of the seal member distanced from the cover to prevent resealing of the seal member during can venting.

In the method according to this third aspect, the step of providing a stand-off member preferably comprises forming at least one rib or at least one post on the top surface of the seal member. The method preferably further comprises the step of forming the stress concentrator as a groove formed axisymmetrically about a central longitudinal axis of the cell.

The present invention will be further understood and appreciated by those skilled in the art by reference to the following drawings and their description, in which:
Figure 1 is a longitudinal cross-sectional view of an electrochemical cell having a seal assembly including a pressure release vent with anti-resealing, shown in a non-vented condition;
Figure 2 is an elevated perspective view of a seal having a plurality of stand-off ribs formed on an upper surface according to one embodiment of the present invention;
Figure 3 is a top plan view of the seal shown in Figure 2;
Figure 4 is an enlarged cross-sectional view taken through lines IV-IV in Figure 3, which further illustrates the stand-off ribs;
Figure 5 is a top plan view of the seal having a plurality of stand-off posts according to another embodiment of the present invention;
Figure 6 is a longitudinal cross-sectional view of the electrochemical cell of Figure 1 further shown in a pressure release venting condition; and
Figure 7 is an exploded cross-sectional view taken through the seal and inner cover as shown in Figure 6 during the pressure release venting condition.

The cell is preferably a cylindrical alkaline electrochemical cell, although the invention is also applicable to cells of different shape or cell chemistry. The cell includes a can, preferably a cylindrical steel can, having a closed bottom end and an open top end. The closed bottom end of the can may further include a positive cover welded or otherwise attached thereto, and preferably formed of plated steel with a protruding nub at its centre region, which forms the positive contact terminal. Assembled to the open top end of the can is a cover and seal assembly, preferably with an outer negative cover which forms the negative contact terminal. A label, for example a metalised, plastic film label, may be formed about the exterior surface of the can, except for the ends of the can. The label may be formed over the peripheral edge of the positive cover and may extend partially onto the negative cover.

For alkaline cells, the cathode is configured as the cell's positive electrode, and is preferably formed of a mixture of manganese dioxide, graphite, potassium hydroxide solution, and additives. The cathode is preferably formed about the interior surface of the can.

The separator is preferably formed of a non-woven fabric that prevents migration of any solid particles in the cell. Preferably, the separator is disposed about the interior surface of the cathode.

For alkaline cells, the anode is configured as the cell's negative electrode, and is preferably formed of zinc powder, a gelling agent, and additives. The anode is preferably disposed with an electrolyte inside the separator and in contact with a current collector.

The current collector preferably includes a brass nail having an elongated body and an enlarged head at one end. The current collector preferably contacts an outer negative cover which forms the negative contact terminal of cell. The outer negative cover is preferably formed of plated steel, and may be held in contact with the current collector via pressure contact or a weld.

A seal, which for cylindrical cells is preferably an annular seal, is disposed in the open end of the can to prevent leakage of electrochemically active cell materials contained in the can. The seal preferably has a central hub portion and a peripheral upstanding wall. An inner cover, which is preferably formed of a rigid metal, may be provided to increase the rigidity and support radial compression of the seal, thereby improving the sealing effectiveness. The inner cover preferably is configured to contact a central hub portion and peripheral upstanding wall of the seal. The inner cover has one or more openings to allow the passage or venting of any gases that may escape through the seal. The seal, inner cover, and any outer negative cover provide a low profile closure to the open end of the can. In addition, the outer negative cover may also include one or more vent openings that serve to expose the non-sealed volume of cell to the surrounding outside atmosphere. Thus, the openings in the inner and outer covers serve to vent pressure build-up from within the cell to the outside atmosphere when the seal vents.

The seal is preferably made of nylon, such as ZYTEL® 101F which is commercially available from E.I. DuPont deNemours and Co., Inc. The seal can be integrally formed to include a thinned portion and stand-off members using a conventional injection moulding process. It should be appreciated that while nylon is a preferred material, other polymeric or other seal materials could be used. In addition, the bottom surface of the seal may be coated with a layer of asphalt to prevent chemical degradation of the seal due to the presence of electrolyte.

Together, the current collector, seal, and inner cover may form a collector and seal assembly that can be inserted as a unit into the open end of the can to seal the active ingredients within the active cell volume. The assembly of the collector and seal assembly and closure of the open end may be achieved, for example, by disposing the seal on top of a bead formed radially inward on the inner wall of the can, and crimping the upper end of the can inwardly and over the outer periphery of the seal to compress it against the bead. Thus, the seal is compressed against the inner cover. Preferably, the seal also serves to electrically insulate the outer negative cover from the can.

According to the present invention, the seal has a stress concentrator, preferably formed as a thinned section in the seal, which acts as a pressure relief mechanism when exposed to an excessive pressure differential, and is intended to rupture or vent when exposed to a predetermined pressure differential to release high pressure gas from within the sealed active volume of the cell. The stress concentrator preferably being a thinned section may have any appropriate shape, but preferably has an axisymmetric shape, i.e., it is symmetric about the central longitudinal axis of the cell. The stress concentrator is preferably formed as a thinned section adjacent to a central hub of the seal so that, upon fracturing, a pliable inner disk portion of the seal is intended to be forced upward to release high pressure gases, which may then exit the cell via apertures formed in the cover, or in inner and outer covers, of the cell. The seal is preferably a low profile seal with a thinned portion which is intended to shear when the internal pressure exceeds a predetermined pressure. Suitable seals of this type are disclosed for example in US-A-5,667,912.

In a preferred embodiment, the seal has a flat planar disk-like portion adjacent to an outer peripheral upstanding wall and a lowered inner disk portion adjacent to a central hub. The inner portion includes a thinned section and is pliable and intended to bend outward when the thinned section ruptures to vent.

According to the present invention, between the seal and the adjacent cover there is provided a stand-off means to prevent the seal, on rupture or venting, from resealing against the cover. The stand-off means may comprise one or more stand-off members for preventing resealing of the seal with the cover. Preferably, the stand-off members are provided on, and more preferably integrally with, the seal, so as to protrude from a top surface thereof. Alternatively, or additionally, stand-off members are provided on the cover so as to protrude from a bottom surface thereof. However, it will be appreciated that the stand-off means may also be fabricated as a groove or channel in a bottom surface of the cover or top surface of seal.

Therefore, the stand-off members may be of any suitable shape and size provided that they prevent complete resealing of the seal with the cover when the seal ruptures or vents under build-up of pressure. Thus, the stand-off members ensure at all times a passage or channel for the escape of gases and relief of pressure build-up when the seal ruptures or vents during a venting condition. For example, the stand-off members may be in the form of protruding ribs or posts, and are preferably formed integrally with a top surface of the seal. The stand-off ribs or posts preferably have a height of at least 4 mils (100 µm), more preferably in the range of at least 5 mils (130 µm) to 7 mils (180 µm). However, the size and shape of the stand-off member may be varied depending on the material and pressure.

In one embodiment, the seal has one or more raised ribs, preferably three ribs, formed on the top surface of the seal. The ribs preferably extend radially and are formed adjacent to and preferably overlap the thinned section of the seal. The ribs, preferably three ribs, are preferably equi-angularly spaced from one another by an angle θ, which is preferably equal to approximately sixty degrees. Accordingly, three ribs would be equi-angularly located within a 120 degree arc. The spaces between adjacent ribs provide channels which serve as pressure relief openings in the event that the seal fractures and is forced into contact with the cover. It should be appreciated that one or more ribs may be employed and that other angles of separation may be used according to other embodiments.

The ribs may be further moulded to the peripheral surface of a central hub of the seal, thereby increasing the strength of the thinned section at each location of the radial ribs. Advantageously, this may, in some situations, prevent the occurrence of a full 360 degree blow-out of the thinned section which, in effect, will prevent resealing of the seal with the cover.

In another embodiment, the seal has one or more posts, preferably three vertical posts, formed on the top surface of the seal. The posts preferably are formed adjacent to and partly over the thinned section, so as to serve as stand-off members between the seal and the cover. Preferably, the posts have a cylindrical base and extend upwardly to provide channels between adjacent posts. In addition, one or more radial rows of posts may be employed to form a radial rib made up of adjacent posts.

During a venting condition, the thinned section of the seal fractures to release high pressure gas from within the cell. During the venting condition, the stand-off members serve to separate at least a portion of seal from the cover or inner cover, to prevent resealing therebetween. As a consequence, pressure from within the vented cell is released to the outer atmosphere through the channels between adjacent stand-off members and exits from the cell to the surrounding environment through apertures in the cover. Accordingly, the present invention advantageously prevents resealing of the seal during a high pressure vent condition, which advantageously prevents or reduces can crimp releases.

The present invention will now be further illustrated by reference to the embodiments shown in the drawings:

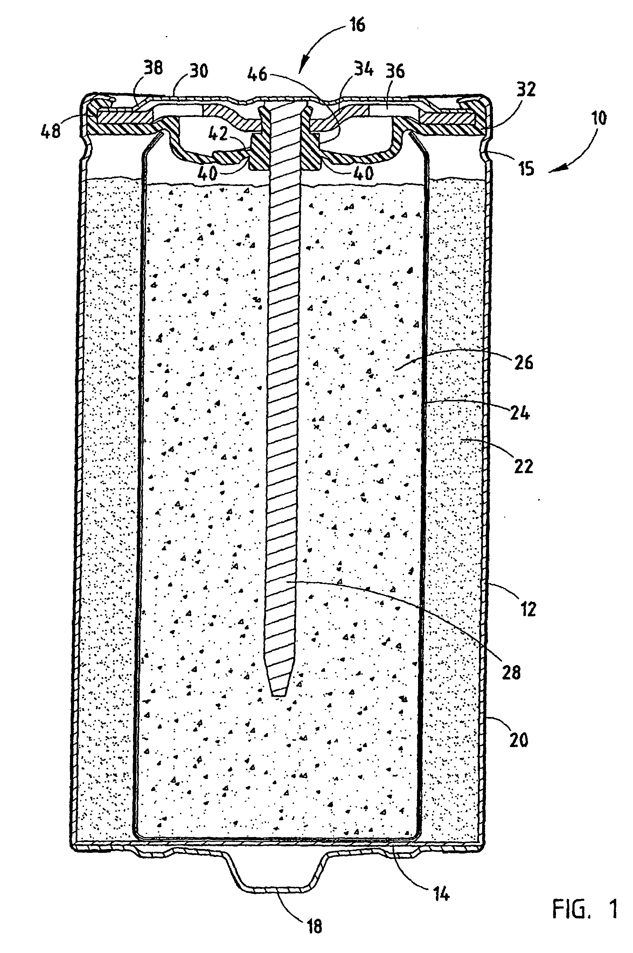

Referring to Figure 1, a cylindrical alkaline electrochemical cell 10 according to a preferred embodiment is shown therein. Electrochemical cell 10 includes a cylindrical steel can 12 having a closed bottom end 14 and an open top end 16. The closed bottom end of can 12 further includes a positive cover welded or otherwise attached thereto and formed of plated steel, with a protruding nub 18 at its centre region, which forms the positive contact terminal of cell 10. Assembled to the open top end 16 of steel can 12 is a cover and seal assembly with an outer negative cover 30 which forms the negative contact terminal of cell 10. A metalised, plastic film label 20 is formed about the exterior surface of steel can 12. except for the ends of steel can 12. Film label 20 is formed over the peripheral edge of the positive cover and may extend partially onto the negative cover as shown.

A cathode, formed of a mixture of manganese dioxide, graphite, potassium hydroxide solution, and additives, is formed about the interior surface of steel can 12. A separator 24, formed of a non-woven fabric that prevents migration of any solid particles in the cell, is disposed about the interior surface of cathode 22. An anode 26, formed of zinc powder, a gelling agent, and additives, is disposed with an electrolyte inside the separator 24 and in contact with a current collector 28 which includes a brass nail having an elongated body and an enlarged head at one end. Accordingly, the cathode 22 is configured as the cell's positive electrode, and the anode 26 is configured as the cell's negative electrode.

The current collector 28 contacts the outer negative cover 30 which forms the negative contact terminal of cell 10. The outer negative cover 30 is formed of plated steel, and is held in contact with current collector 28 via pressure contact or a weld. An annular nylon seal 32 is disposed in the open end of steel can 12 to prevent leakage of the electrochemically active cell materials contained in steel can 12. An inner cover 34, formed of a rigid metal, is provided to increase the rigidity and support the radial compression of nylon seal 32, thereby improving the sealing effectiveness. The inner cover 34 is configured to contact the central hub portion 46 and peripheral upstanding wall 48 of seal 32, and has one or more vent openings, i.e., apertures 36, formed through the inner cover 34. The seal 32, inner cover 34, and outer negative cover 30 provide a low profile closure to the open end 16 of can 12. In addition, the outer negative cover 30 also includes one or more vent openings 38 that serve to expose the non-sealed volume of cell 10 to the surrounding outside atmosphere. Vent openings 36 and 38 serve to vent pressure build-up from within the cell 10 to the outside atmosphere when the seal 32 vents.

Together, the current collector 28, nylon seal 32, and inner cover 34 form a collector and seal assembly that can be inserted as a unit into the open end 16 of steel can 12 to seal the active ingredients within the active cell volume. The assembly of the collector and seal assembly and closure of the open end includes disposing the nylon seal 32 on top of a bead 15 formed radially inward on the inner wall of the can 12, and crimping the upper end of the can 12 inwardly and over the outer periphery of the seal 32 to compress it against the bead 15. Therefore, the nylon seal 32 is compressed against the inner cover 34. It should also be appreciated that the outer negative cover 30 is electrically insulated from the steel can 12 by way of nylon seal 32.

Nylon seal 32 has a stress concentration vent, formed as a thinned section 40, which acts as a pressure relief mechanism when exposed to an excessive pressure differential. The thinned section 40 has an axisymmetric shape, i.e., it is symmetric about the central longitudinal axis of cell 10, and is intended to fracture when exposed to a predetermined pressure differential to release high pressure gas from within the sealed active volume of cell 10. Thinned section 40 is formed adjacent to central hub 46 and, upon fracturing, a pliable inner disk portion 45 of seal 32 is intended to be forced upward to release high pressure gases, which may then exit cell 10 via apertures 36 and 38 formed in inner cover 34 and outer cover 30, respectively.

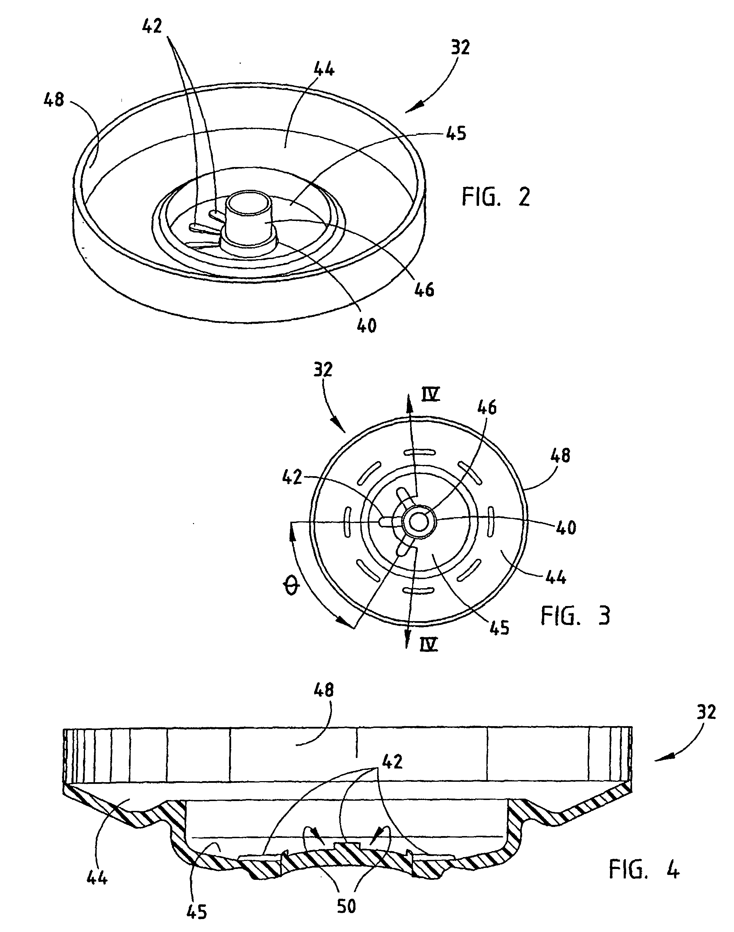

Referring to Figures 2 and 3, a seal 32 is shown according to one embodiment of the present invention, having a plurality of stand-off members for preventing resealing of the seal 32 with the inner cover 34. Seal 32 has a flat planar disk-like portion 44 adjacent to outer peripheral upstanding wall 48 and a lowered inner disk portion 45 adjacent to central hub 46. Inner portion 45 includes the thinned section 40 and is pliable and intended to bend outward when thinned section 40 ruptures to vent. Seal 30 has three raised ribs 42 formed on the top surface region 45 of seal 32 which serve as stand-off members between seal 32 and inner cover 34 to prevent resealing of seal 32 with inner cover 34 during a venting condition. Ribs 42 extend radially and preferably overlap thinned section 40.

With particular reference to Figure 3, three ribs 42 are shown equi-angularly spaced from one another by an angle θ, which is preferably equal to approximately sixty degrees. Accordingly, the three ribs 42 are equi-angularly located within a 120 degree arc. Referring further to Figure 4, provided between adjacent ribs 42 are channels 50 which serve to provide a pressure relief opening in the event that seal 32 fractures and is forced into contact with inner cover 34.

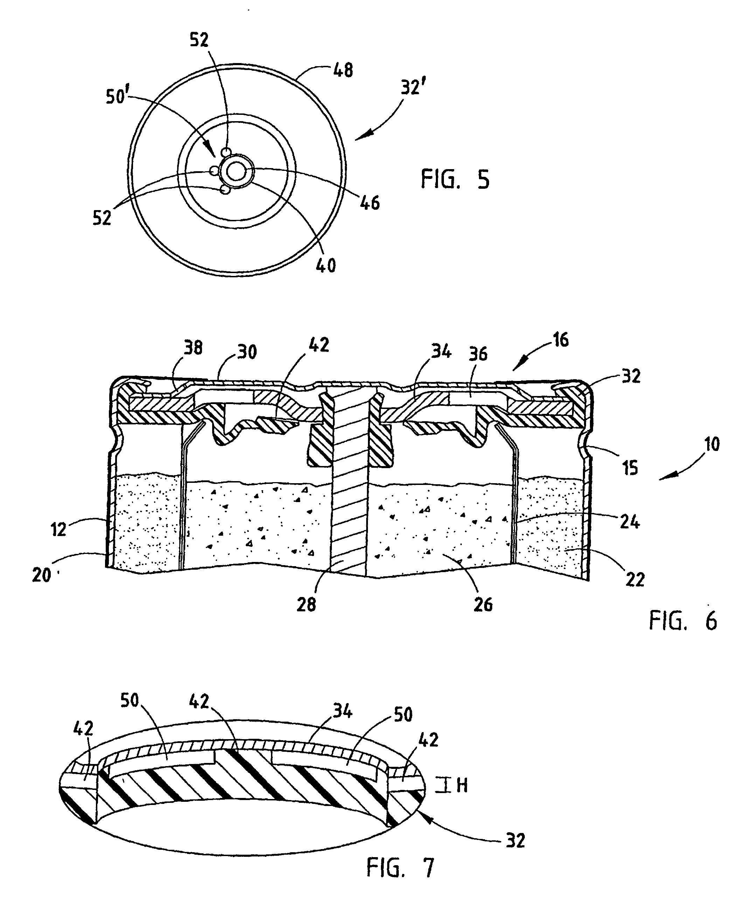

Referring to Figure 5, a seal 32' is shown according to another embodiment of the present invention, having three vertical posts 52 formed adjacent to and partly over thinned section 40 which serve as the stand-off member between seal 32' and inner cover 34. Posts 52 are shown having a cylindrical base and extend upwardly to provide channels 50' between adjacent posts 52.

Referring to Figure 6, the electrochemical cell 10 is further shown during a venting condition of the cell 10 in which the thinned section 40 has fractured to release high pressure gas from within the cell 10. During the venting condition, the stand-off members 42 or 52 serve to separate at least a portion of seal 32 from inner cover 34 to prevent resealing therebetween. As a consequence, pressure from within the vented cell 10 is released to the outer atmosphere through channels 50 or 50' between adjacent stand-off members and exits from the cell 10 to the surrounding environment through apertures 36 and 38.

Referring further to Figure 7, the stand-off ribs 42 are further shown adjacent to and contacting the bottom surface of inner cover 34 during the venting condition. At the same time, channels 50 provide gas release passages through which pressurised gas may be released from the cell 10 while preventing resealing of the seal 32 with inner cover 34. The stand-off ribs 42 or 52 preferably have a height H, extending above inner disk portion 45 of seal 32.

## Claims

1. An electrochemical cell comprising:
a container having a closed bottom and an open top end;
a positive electrode disposed in the container;
a negative electrode disposed in the container;
a separator disposed between the positive electrode and the negative electrode;
an electrolyte disposed in the container;
a seal member disposed in the open top end of the container for closing the open top end of the container, the seal member having a stress concentrator formed about a central longitudinal axis of the cell for providing pressure release to vent high pressure gases;
a cover disposed in the open end of the container and at least partially covering the seal member, the cover having at least one opening formed therein; and
stand-off means for preventing resealing of the seal member against the cover when the seal member vents.

2. An electrochemical cell according to claim 1, wherein the stand-off means comprises one or more stand-off members formed on a surface of the seal member.

3. An electrochemical cell according to claim 2, wherein the stand-off member extends from a top surface of the seal member and is adjacent to the stress concentrator.

4. An electrochemical cell according to any preceding claim, wherein the stress concentrator comprises a groove, preferably a substantially circular groove, formed axisymmetrically about a central longitudinal axis of the cell.

5. An electrochemical cell according to any preceding claim, wherein the seal member and the stand-off means comprise polymeric material.

6. An electrochemical cell according to claim 1 or claim 2, wherein the stand-off means comprises at least one rib or post formed on a top surface of the seal member.

7. An electrochemical cell according to any preceding claim, wherein the stand-off means comprises three ribs.

8. An electrochemical cell according to claim 7, wherein the three ribs are angularly spaced sixty degrees one apart from another.

9. An electrochemical cell according to any preceding claim, wherein the stand-off means comprises a stand-off member that has a height of at least 5 mils (130 µm).

10. An electrochemical cell according to any preceding claim, wherein the cell further comprises a current collector assembled with the seal member to form a collector assembly.

11. A seal assembly for sealing the open end of an electrochemical cell container, the seal assembly comprising:
a seal member adapted to be disposed in an open end of a container to provide a sealed closure to the open end of the container, the seal member having a stress concentrator formed about a complete 360 degree rotation;
a cover overlying at least a portion of the seal member, the cover having at least one opening formed therein; and
a stand-off member disposed between a top surface of the seal member and a bottom surface of the cover for distancing at least a portion of the seal member from the cover to prevent resealing of the seal member during can venting.

12. A method for assembling an electrochemical cell comprising the steps of:
providing a container having a closed bottom end and an open top end;
disposing a positive electrode in the container;
disposing a negative electrode in the container;
disposing a separator between the positive electrode and the negative electrode;
disposing an electrolyte in the container;
providing a seal member having a stress concentrator formed in the seal member about a central longitudinal axis of the cell;
disposing the seal member in the open top end of the container for closing the open top end of the container;
disposing a cover in the open top end of the container and over the seal member, the cover having at least one opening formed therein; and
providing a stand-off member disposed between a top surface of the seal member and a bottom surface of the cover for keeping at least a portion of the seal member distanced from the cover to prevent resealing of the seal member during can venting.

## Patentansprüche

1. Elektrochemische Zelle, die enthält:
einen Behälter mit einem geschlossenen Bodenende und mit einem offenen Kopfende;
eine positive Elektrode, die in dem Behälter angeordnet ist;
eine negative Elektrode, die in dem Behälter angeordnet ist;
eine Trennvorrichtung, die zwischen der positiven Elektrode und der negativen Elektrode angeordnet ist;
einen Elektrolyten, der in dem Behälter angeordnet ist;
ein Dichtungselement, das in dem offenen Kopfende des Behälters angeordnet ist zum Schließen des offenen Kopfendes des Behälters, wobei das Dichtungselement einen Spannungskonzentrator aufweist, der um eine zentrale Längsachse der Zelle herum ausgebildet ist, um eine Druckfreigabe zum Ablassen der einen hohen Druck verursachenden Gase zu ergeben;
einen Deckel, der in dem offenen Ende des Behälters angeordnet ist und der das Dichtungselement mindestens teilweise bedeckt, wobei der Deckel mindestens eine darin ausgebildete Öffnung aufweist; und
ein Abstandshilfsmittel, um ein erneutes Abdichten des Dichtungselementes gegen den Deckel zu verhindern, wenn das Dichtungselement entlüftet.

2. Elektrochemische Zelle gemäss Anspruch 1, bei welcher das Abstandshilfsmittel ein Abstandsglied oder mehrere Abstandsglieder enthält, welche auf einer Oberfläche des Dichtungselements ausgebildet sind.

3. Elektrochemische Zelle gemäss Anspruch 2, bei welcher das Abstandsglied sich von einer oberen Oberfläche des Dichtungselementes aus erstreckt und sich räumlich in der Nachbarschaft des Spannungskonzentrators befindet.

4. Elektrochemische Zelle gemäss irgendeinem vorhergehenden Anspruch, bei welcher der Spannungskonzentrator eine Rille aufweist, vorzugsweise eine im Wesentlichen kreisförmige Rille, die achsensymmetrisch um die zentrale Längsachse der Zelle herum ausgebildet ist.

5. Elektrochernische Zelle gemäss irgendeinem vorhergehenden Anspruch, bei welcher das Dichtungselement und das Abstandshilfsmittel einen Polymerwerkstoff enthalten.

6. Elektrochemische Zelle gemäss Anspruch 1 oder Anspruch 2, bei welcher das Abstandshilfsmittel mindestens eine Rippe oder eine Stütze enthält, welche auf einer oberen Oberfläche des Dichtungselementes ausgebildet ist.

7. Elektrochemische Zelle gemäss irgendeinem vorhergehenden Anspruch, bei welcher das Abstandshilfsmittel drei Rippen enthält.

8. Elektrochemische Zelle gemäss Anspruch 7, bei welcher die drei Rippen unter einem Winkel von 60° räumlich voneinander entfernt angeordnet sind.

9. Elektrochemische Zelle gemäss irgendeinem vorhergehenden Anspruch, bei welcher das Abstandshilfsmittel ein Abstandsglied enthält, das eine Höhe von mindestens 5 mils (130 µm) aufweist.

10. Elektrochemische Zelle gemäss irgendeinem vorhergehenden Anspruch, bei welcher die Zelle weiterhin einen Stromkollektor enthält, der mit dem Dichtungselement zusammengebaut ist, um eine Kollektoranordnung zu ergeben.

11. Dichtungsanordnung zum Abdichten des offenen Endes eines Behälters einer elektrochemischen Zelle, wobei die Dichtungsanordnung aufweist:
ein Dichtungselement, das angepasst ist, um so in einem offenen Ende eines Behälters angeordnet zu werden, dass ein abgedichteter Verschluss an dem offenen Ende des Behälters geliefert wird, wobei das Dichtungselement einen Spannungskonzentrator aufweist, der etwa um eine vollständige Drehung von 360° ausgebildet ist;
eine Deckel, der über mindestens einem Teil des Dichtungselementes draufliegt, wobei der Deckel mindestens eine darin ausgebildete Öffnung aufweist; und
ein Abstandsglied, das zwischen einer oberen Fläche des Dichtungselementes und einer unteren Fläche des Deckels angeordnet ist, um mindestens einen Teil des Dichtungselementes in einer Entfernung von dem Deckel zu halten und ein erneutes Abdichten des Dichtungselementes während der Behälterendüftung zu verhindern.

12. Verfahren für den Zusammenbau einer elektrochemischen Zelle, das folgende Schritte umfasst:
Bereitstellung eines Behälter mit einem geschlossenen Bodenende und mit einem offenen Kopfende;
Anordnung einer positiven Elektrode in dem Behälter;
Anordnung einer negativen Elektrode in dem Behälter;
Anordnung einer Trennvorrichtung zwischen der positiven Elektrode und der negativen Elektrode;
Anordnung eines Elektrolyten in dem Behälter;
Bereitstellung eines Dichtungselementes mit einem Spannungskonzentrator, der in dem Dichtungselement um eine zentrale Längsachse der Zelle herum ausgebildet ist;
Anordnung eines Dichtungselementes in dem offenen Kopfende des Behälters zum Schließen des offenen Kopfendes des Behälters;
Anordnung eines Deckels in dem offenen Kopfende des Behälters und über dem Dichtungselement, wobei der Deckel mindestens eine darin ausgebildete Öffnung aufweist; und
Bereitstellung eines Abstandsgliedes, das zwischen einer oberen Fläche des Dichtungselementes und einer unteren Fläche des Deckels angeordnet ist, um mindestens einen Teil des Dichtungselementes in einer Entfernung von dem Deckel zu halten und ein erneutes Abdichten des Dichtungselementes während der Behälterentlüftung zu verhindern.

## Revendications

1. Cellule électrochimique, comprenant;
un récipient comportant une extrémité inférieure fermée et une extrémité supérieure ouverte;
une électrode positive agencée dans le récipient;
une électrode négative agencée dans le récipient;
un séparateur agencé entre l'électrode positive et l'électrode négative;
un électrolyte agencé dans le récipient;
un élément de joint agencé dans l'extrémité supérieure ouverte du récipient pour fermer l'extrémité supérieure ouverte du récipient, l'élément de joint comportant un élément de concentration des contraintes formé autour de l'axe longitudinal central de la cellule pour assurer la détente de la pression pour décharger les gaz haute pression;
un couvercle agencé dans l'extrémité ouverte du récipient et recouvrant au moins partiellement l'élément de joint, le couvercle comportant au moins une ouverture qui y est formée; et
un moyen de séparation pour empêcher une refermeture étanche de l'élément de joint contre le couvercle lors de la décharge par l'élément de joint.

2. Cellule électrochimique selon la revendication 1, dans laquelle le moyen de séparation comprend un ou plusieurs éléments de séparation formés sur une surface de l'élément de joint.

3. Cellule électrochimique selon la revendication 2, dans laquelle l'élément de séparation s'étend à partir d'une surface supérieure de l'élément de joint et est adjacent à l'élément de concentration des contraintes.

4. Cellule électrochimique selon l'une quelconque des revendications précédentes, dans laquelle l'élément de concentration des contraintes est constitué par une rainure, de préférence une rainure pratiquement annulaire agencée de manière axisymétrique autour d'un axe longitudinal central de la cellule.

5. Cellule électrochimique selon l'une quelconque des revendications précédentes, dans laquelle l'élément de joint et le moyen de séparation sont composés d'un matériau polymère.

6. Cellule électrochimique selon les revendications 1 ou 2, dans laquelle le moyen de séparation comprend au moins une nervure ou un montant agencé sur une surface supérieure de l'élément de joint.

7. Cellule électrochimique selon l'une quelconque des revendications précédentes, dans laquelle le moyen de séparation comprend trois nervures.

8. Cellule électrochimique selon la revendication 7, dans laquelle les trois nervures sont espacées angulairement de soixante degrés.

9. Cellule électrochimique selon l'une quelconque des revendications précédentes, dans laquelle le moyen de séparation comprend un élément de séparation ayant une hauteur d'au moins 5 millièmes de pouce (130 µm).

10. Cellule électrochimique selon l'une quelconque des revendications précédentes, dans laquelle la cellule comprend en outre un collecteur de courant assemblé à l'élément de joint pour former un assemblage de collecteur.

11. Assemblage de joint destiné à fermer de manière étanche l'extrémité ouverte d'un récipient de cellule électrochimique, l'assemblage de joint comprenant:
un élément de joint destiné à être agencé dans une extrémité ouverte d'un récipient pour fermer de manière étanche l'extrémité ouverte du récipient, l'élément de joint comportant un élément de concentration des contraintes formé autour d'une rotation complète de 360 degrés;
un couvercle superposé sur au moins une partie de l'élément de joint, le couvercle comportant au moins une ouverture qui y est formée; et
un élément de séparation agencé entre une surface supérieure de l'élément de joint et une surface inférieure du couvercle pour écarter au moins une partie de l'élément de joint du couvercle pour empêcher une refermeture étanche de l'élément de joint au cours de l'évacuation du bac.

12. Procédé d'assemblage d'une cellule électrochimique, comprenant les étapes ci-dessous:
fourniture d'un récipient comportant une extrémité inférieure fermée et une extrémité supérieure ouverte;
agencement d'une électrode positive dans le récipient;
agencement d'une électrode négative dans le récipient;
agencement d'un séparateur entre l'électrode positive et l'électrode négative;
agencement d'un électrolyte dans le récipient;
fourniture d'un élément de joint comportant un élément de concentration des contraintes agencé dans l'élément de joint autour d'un axe longitudinal central de la cellule;
agencement de l'élément de joint dans l'extrémité supérieure ouverte du récipient pour fermer l'extrémité supérieure ouverte du récipient;
agencement d'un couvercle dans l'extrémité supérieure ouverte du récipient et au-dessus de l'élément de joint, le couvercle comportant au moins une ouverture qui y est formée; et
fourniture d'un élément de séparation agencé entre une surface supérieure de l'élément de joint et une surface inférieure du couvercle pour écarter au moins une partie de l'élément de joint du couvercle pour empêcher une refermeture étanche de l'élément de joint au cours de l'évacuation du bac.
